# EUROPÄISCHE PATENTSCHRIFT

(11) **EP 0 769 648 B1**
(45) Veröffentlichungstag und Bekanntmachung des Hinweises auf die Patenterteilung: **31.05.2000**
(21) Anmeldenummer: 96116433.2
(22) Anmeldetag: 14.10.1996
(51) Int. Cl.: F16L 33/02, F16L 33/08

(54) **Schlauchschelle**
Hose clip
Collier de serrage

(30) Priorität: 19.10.1995 DE 19538819
(43) Veröffentlichungstag der Anmeldung: 23.04.1997
(73) Patentinhaber: Rasmussen GmbH, D-63477 Maintal (DE)
(72) Erfinder: Sauer, Heinz, 63549 Ronneburg (DE)
(74) Vertreter: Knoblauch, Ulrich, Dr.-Ing.

(56) Entgegenhaltungen:
- DE-A- 1 939 414
- GB-A- 2 112 444
- US-A- 1 373 673
- US-A- 3 396 439
- US-A- 4 308 648

## Beschreibung

Die Erfindung bezieht sich auf eine Schlauchschelle mit einem elastisch biegsamen Schellenband aus Metall und einem die Enden des Schellenbandes verbindenden Spannkopf.

Das Material von Schläuchen, insbesondere Kunststoff-Schläuchen, pflegt sich bei Erwärmung auszudehnen und bei Abkühlung, insbesondere bei Temperaturen unterhalb von 0°C, stark zusammenzuziehen. Wenn ein solcher Schlauch mittels einer unelastischen herkömmlichen Schlauchschelle, zum Beispiel einer herkömmlichen Schneckengewindeschelle, auf einem Rohr oder dergleichen festgeklemmt wird, besteht mithin die Gefahr, daß sich die Schlauchschelle auf dem Schlauch löst, wenn sich der Schlauch bei Tiefkühlung zusammenzieht. Gegebenenfalls wird die Verbindung des Schlauches mit dem Rohr undicht. Um dies zu verhindern, sind auch schon Schlauchschellen bekannt geworden, zum Beispiel durch die DE 39 41 135 C1, DE 40 05 631 C2 oder DE 41 27 017 C1, bei denen eine separat angebrachte Feder im gespannten Zustand der Schlauchschelle unter Vorspannung steht und bei sinkender Temperatur und sich zusammenziehendem Schlauch den Schlauch weiterhin elastisch auf dem Rohr festklemmt. Während eine solche Schlauchschelle bei niedrigen Temperaturen den Schlauch mit besserer Dichtwirkung als eine unelastische Schlauchschelle festklemmt, ist ihre Spannkraft bei höheren Temperaturen geringer als die einer unelastischen Schlauchschelle.

Der Erfindung liegt die Aufgabe zugrunde, eine Schlauchschelle der eingangs genannten Art anzugeben, die über einen größeren Temperaturbereich, sowohl bei unter dem Gefrierpunkt als auch oberhalb des Gefrierpunkts liegenden Temperaturen, eine höhere Spannkraft und damit dichtere Verbindung zwischen Schlauch und Rohr sicherstellt.

Erfindungsgemäß ist diese Aufgabe dadurch gelöst, daß das Schellenband einen in Umfangsrichtung verlaufenden Schlitz aufweist und nur der eine der beiden den Schlitz seitlich begrenzenden Randabschnitte des Schellenbandes eine Federeinrichtung aufweist, die in Umfangsrichtung der Schlauchschelle über den gesamten Betriebstemperaturbereich eine Federkraft bewirkt.

Bei dieser Lösung bestimmt bei höheren Temperaturen im wesentlichen der ungefederte Randabschnitt die Spannkraft der Schlauchschelle, weil dieser Randabschnitt sich nicht in dem Maße mit zunehmender Temperatur unter dem Expansionsdruck des Schlauchmaterials dehnt wie der gefederte und damit elastisch dehnbare Randabschnitt. Bei abnehmenden Temperaturen, insbesondere unterhalb 0°C, wenn sich das Schlauchmaterial zusammenzieht, zieht sich auch der gefederte Randabschnitt weiter zusammen, so daß er auch bei tiefen Temperaturen, nachdem der ungefederte Randabschnitt bereits unwirksam geworden ist, für die Aufrechterhaltung einer Spannkraft auf den Schlauch sorgt.

Vorzugsweise ist dafür gesorgt, daß die Federeinrichtung durch eine Wellung des einen Randabschnitts gebildet ist. Bei dieser Ausbildung kommt man ohne separate Feder aus.

Die Wellung kann durch Tiefziehen ausgebildet sein, nachdem der Schlitz ausgestanzt worden ist, um ohne Änderung der Länge des ungewellten Randabschnitts die Wellung mit der erforderlichen Federvorspannung auszubilden.

Alternativ ist es aber auch möglich, daß der andere Randabschnitt getrennt ist und seine Enden einander überlappend verbunden sind und daß die Wellung durch Verbiegen des einen Randabschnitts ausgebildet ist. Auch auf diese Weise läßt sich die erforderliche Federvorspannung in der Wellung ausbilden, ohne das Material der Wellung zu dehnen.

Sodann kann dafür gesorgt sein, daß die Wellung auf der Innenseite des Schellenbandes durch eine Unterlage abgedeckt ist, die am Schellenband so befestigt ist, daß eine Relativbewegung zwischen Wellung und Unterlage möglich ist. Auf diese Weise kann sich die Wellung, ungehindert durch den Schlauch, dehnen oder zusammenziehen.

Zusätzlich kann die Unterlage einen Spalt zwischen den Enden des Schellenbandes überbrücken. Auf diese Weise wird gleichzeitig verhindert, daß das Schlauchmaterial in diesen Spalt eindringt.

Sodann kann die Unterlage durch einen oder zwei Streifen gebildet oder etwa U-förmig sein, der eine der beiden Streifen oder der einzige Streifen oder der eine Schenkel der U-förmigen Unterlage die Unterseite der Wellung abdecken und der andere der beiden Streifen oder Schenkel an der Unterseite des ungewellten Randabschnitts anliegen und die beiden Streifen oder Schenkel oder der einzige Streifen radial nach außen gebogene Flansche aufweisen, die an den Rändern des jeweiligen Randabschnitts anliegen. Hierbei sorgen die Flansche für eine Führung der seitlichen Randabschnitte des Schlitzes in Umfangsrichtung der Schlauchschelle.

Ferner ist es günstig, wenn der Schlitz an seinen Enden jeweils von einer aus dem Schellenband herausgedrückten, eine Spannbacke bildenden, bandförmigen, etwa umgekehrt U-förmigen Schlaufe überbrückt ist und beide Schlaufen von einer Spannschraube durchsetzt sind. Auf diese Weise ausgebildete Spannbacken halten hohen Spannkräften ohne Verbiegung in Umfangsrichtung stand und brauchen dennoch nicht separat hergestellt und mit dem Schellenband verbunden zu werden.

Eine vorteilhafte Ausgestaltung kann sodann darin bestehen, daß die Schlaufen sich in Axialrichtung der Schlauchschelle erstreckende Joche aufweisen, an deren einander abgekehrten Rändern Laschen radial nach innen abgebogen sind, von denen die auf seiten des Spannschraubenkopfes liegende Lasche ein Loch zur Durchführung des Spannschraubenschaftes aufweist und an den angrenzenden Rändern der Schlaufenschenkel anliegt und die Lasche der benachbarten Schlaufe ein Gewinde abstützt, in das der Spannschraubenschaft eingreift. Auf diese Weise wird verhindert, daß sich beim Spannen der Spannschraube der Spannschraubenkopf in die eine Schlaufe und der Spannschraubenschaft in die andere Schlaufe hineinzieht.

Um ohne zusätzliche Mutter zur Aufnahme des Spannschraubenschaftes auszukommen, kann das Gewinde im durchgezogenen Rand eines Loches in der Lasche der benachbarten Schlaufe ausgebildet sein und diese Lasche an den angrenzenden Schlaufenschenkeln anliegen.

Wenn die Laschen seitlich auf die angrenzenden Schlaufenschenkel umgebogene Lappen aufweisen, erhöht sich der Widerstand der Laschen gegen ein Hineinziehen in die Schlaufen beim Spannen der Spannschraube. Gleichzeitig werden die Schlaufenschenkel axial zusammengehalten und ein Verdrehen der Lasche verhindert.

Alternativ kann es sich bei der Schlauchschelle um eine Schneckengewindeschelle handeln.

Vorzugsweise erstreckt sich ferner der Schlitz über wenigstens ein Viertel des Umfangs der gespannten Schlauchschelle. Auf diese Weise ergibt sich hinreichend Material für die Ausbildung der Wellung. Gleichzeitig ist das Schellenband über einen hinreichend großen Umfangsbereich an seinem einen Umfangsrand flexibler als bei einem kürzeren Schlitz.

Die Erfindung und ihre Weiterbildungen werden nachstehend anhand der Zeichnungen bevorzugter Ausführungsbeispiele näher beschrieben. Es zeigen:
- Fig. 1: eine perspektivische Darstellung eines ersten Ausführungsbeispiels einer erfindungsgemäßen Schlauchschelle, die um einen auf einen Endabschnitt eines Rohres aufgeschobenen Endabschnitt eines Schlauches herumgelegt ist,
- Fig. 2: eine geringfügige Abwandlung der Schlauchschelle nach Fig. 1 in perspektivischer Darstellung und
- Fig. 3: ein weiteres Ausführungsbeispiel einer erfindungsgemäßen Schlauchschelle in perspektivischer Darstellung.

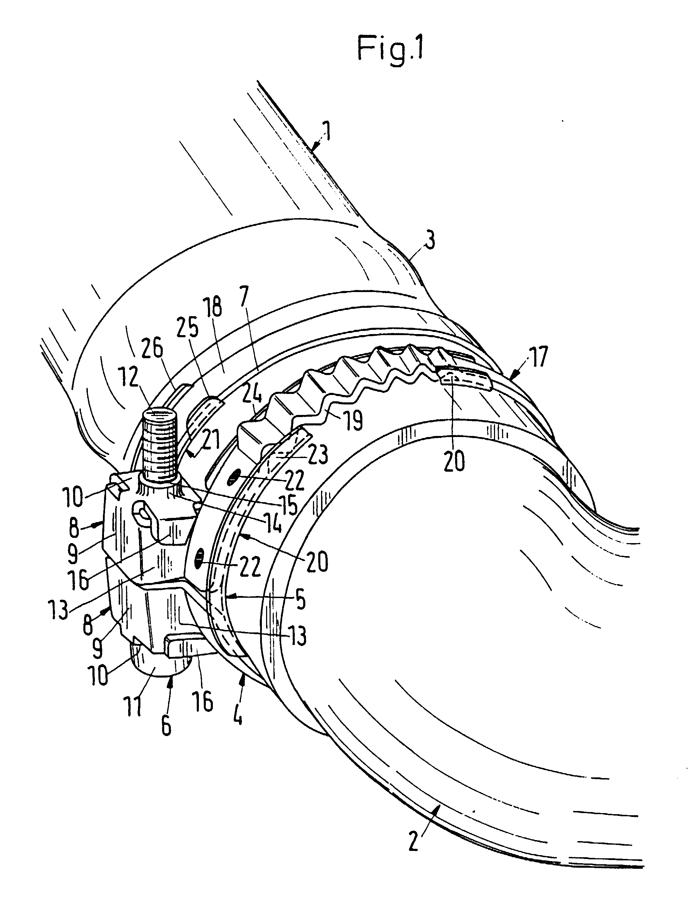

Die Schlauchschelle nach Fig. 1 dient zum Festklemmen eines Endabschnitts eines Schlauches 1 aus Kunststoff auf einem mit einer umlaufenden Halterippe versehenen Endabschnitt eines gekrümmten Rohres 2, zum Beispiel eines Rohrstutzens, wobei die Halterippe das Schlauchmaterial zu einem Wulst 3 radial nach außen drückt.

Die Schlauchschelle besteht aus einem elastisch biegsamen Schellenband 4 aus rostfreiem oder gehärtetem, mit einer korrosionsbeständigen Beschichtung versehenen Federstahl, einer den Spalt zwischen den Enden des Schellenbandes 4 überbrückenden Unterlage 5 und einer Spannschraube 6.

Das Schellenband 4 hat einen in Umfangsrichtung der Schlauchschelle verlaufenden Schlitz 7, der an seinen Enden jeweils von einer aus dem Schellenband 4 herausgedrückten, eine Spannbacke bildenden, bandförmigen, etwa umgekehrt U-förmigen Schlaufe 8 überbrückt ist, wobei die Schlaufen 8 von der Spannschraube 6 durchsetzt sind. Die Schlaufen 8 haben sich in Axialrichtung der Schlauchschelle erstreckende Joche 9, an deren einander abgekehrten Rändern Laschen 10 radial nach innen abgebogen sind. Die auf seiten des Spannschraubenkopfes 11 liegende Lasche 10 hat ein (in der dargestellten Ansicht nicht sichtbares) Loch zur Durchführung des Spannschraubenschaftes 12 und liegt an den angrenzenden Rändern der Schlaufenschenkel 13 an. Die Lasche 10 der benachbarten Schlaufe 8 stützt ein Gewinde ab, in das der Schraubenschaft 12 eingreift. Das Gewinde ist im durchgezogenen Rand 14 eines Loches 15 in der Lasche 10 der benachbarten Schlaufe 8 ausgebildet, wobei auch diese Lasche 10 an den angrenzenden Schlaufenschenkeln 13 anliegt. Alternativ könnte die Lasche 10 auf seiten des Schraubenschaftes eine Mutter abstützen, was jedoch nicht bevorzugt wird. Die Laschen 10 haben ferner seitlich auf die angrenzenden Schlaufenschenkel 13 umgebogene Lappen 16.

Die dargestellte Schlauchschelle hat den Vorteil, daß die durch die Schlaufen 8 gebildeten Spannbacken aufgrund ihrer in Umfangsrichtung breiten Bandform hohen Spannkräften standhalten und nicht getrennt vom Schellenband 4 ausgebildet und dann mit diesem, zum Beispiel durch Punktschweißung, verbunden zu werden brauchen. Desgleichen sind zur Abstützung der Spannschraube 6 keine separaten Teile, wie Muttern oder Unterlegscheiben, erforderlich. Zur Herstellung des Schellenbandes 4 wird zunächst eine streifen- oder bandförmige Platine aus einem Blech ausgestanzt. Gleichzeitig wird der Schlitz aus dem Blech ausgestanzt, um die Schlaufen 8 zu bilden. Beim Ausstanzen des Schlitzes 7 bleibt das Material für die Laschen 10 und die Lappen 16 stehen, d.h. es wird nicht mit ausgestanzt, so daß entsprechend weniger Materialabfall beim Ausstanzen des Schlitzes 7 anfällt. Durch die Anlage der Laschen 10 an den angrenzenden Rändern der Schlaufenschenkel 13 ist sichergestellt, daß zum einen nicht die Laschen 10 selbst und zum anderen auch nicht der Spannschraubenkopf 11 beim Spannen der Spannschraube 6 in die Schlaufen 8 hineingezogen werden bzw. wird. Auch die seitlich auf die angrenzenden Schlaufenschenkel 13 umgebogenen Lappen 16 tragen dazu bei, daß beim Spannen der Spannschraube 6 weder die Laschen 10 noch der Spannschraubenkopf 11 in die betreffende Schlaufe 8 eindringen bzw. eindringt, die Laschen 10 sich nicht verdrehen und die Schlaufen 8 sich nicht durch Axialkräfte von Schlauch 1 und Rohr 2 aufweiten.

Der Schlitz 7 ist seitlich durch jeweils einen von zwei Randabschnitten 17, 18 des Schellenbandes 4 begrenzt. Der eine Randabschnitt 17 ist mit einer Federeinrichtung in Form einer Wellung 19 versehen, die über den gesamten Betriebstemperaturbereich der Schlauchschelle eine Federkraft bewirkt. Die Wellung 19 ist durch Tiefziehen bei der Formung des Schellenbandes 4 gebildet.

Die Unterlage 5 besteht aus zwei getrennten, sich in Umfangsrichtung erstreckenden Streifen 20 und 21, die jeweils an der Unterseite eines der Randabschnitte 17 und 18 anliegen, mit dem einen Ende der Randabschnitte 17 und 18 durch Punktschweißungen 22 verbunden sind und die Spalte zwischen den Schlaufen 8 beiderseits der Schenkel 13 überbrücken. Die Streifen 20 und 21 können jedoch alternativ auch durch die Schenkel einer U-förmigen Platte gebildet sein, die die genannten Spalte überbrückt. Gegebenenfalls kann aber auch der Streifen 21 weggelassen und die Unterlage 5 nur durch den Streifen 20 gebildet sein.

Der teilweise unterbrochen dargestellte Streifen 20 deckt die Unterseite der Wellung 19 ab. Beide Streifen sind mit radial nach außen gebogenen Flanschen 23 bis 26 versehen, die jeweils an den Rändern der Randabschnitte 17 und 18 anliegen. Wenn man nur den axialen Spalt zwischen den Enden jedes Randabschnitts 17 bzw. 18 überbrücken will, um dort ein Austreten und Einklemmen des Schlauchmaterials zu vermeiden, genügt es, die Enden jedes Randabschnitts 17 bzw. 18 einander überlappen zu lassen, indem das eine Ende jedes Randabschnitts 17, 18, das auf seiten der einen Schlaufe 8 liegt, über den Spalt hinaus verlängert wird. Diese Verlängerungen können zusätzlich in Axialrichtung bis zum jeweils gegenüberliegenden Rand des Schlitzes 7 verbreitert sein und im verbreiterten Bereich einander überlappen und gegebenenfalls dort miteinander durch Punktschweißung verbunden sein. Diese Überlappung verhindert, daß die als Überbrückung des Spaltes zwischen den Spannbacken 8 dienende Verlängerung beim Zusammenziehen der Spannbacken 8, wenn der Rohrdurchmesser so groß ist, daß ein größerer Spalt zwischen den Spannbacken verbleibt, nicht radial nach außen in den Spalt gewölbt wird, da die Überlappung die Verlängerung versteift.

Nach dem Spannen der Schlauchschelle durch Festziehen der Spannschraube 6 übt im wesentlichen der Randabschnitt 18 in einem Betriebstemperaturbereich, der oberhalb von etwa 0°C liegt, die erforderliche Spannkraft auf den Schlauch 1 aus, da sich das Schlauchmaterial bei steigender Temperatur ausdehnt, ohne daß sich der Randabschnitt 18 ebenfalls in gleichem Maße ausdehnt. Die im gesamten Temperaturbereich unter Federvorspannung stehende Wellung 19 übt zwar ebenfalls bei höherer Temperatur eine Spannkraft auf den Schlauch 1 aus, jedoch nicht in dem Maße wie der Randabschnitt 18. Bei sinkender Betriebstemperatur, insbesondere wenn diese bis unter den Gefrierpunkt fällt, zieht sich das Schlauchmaterial dagegen zusammen, so daß der Randabschnitt 18 schließlich keine Spannkraft mehr auf den Schlauch 1 ausübt. Dagegen zieht sich der Randabschnitt 17 aufgrund der federnden Wellung 19 weiter zusammen, so daß auch bei tiefen Temperaturen bis etwa -40°C weiterhin eine Spannkraft auf den Schlauch 1 ausgeübt wird und für eine hinreichende Abdichtung zwischen Schlauch 1 und Rohr 2 gesorgt ist.

Die Unterlage 5 verhindert hierbei nicht nur das Eindringen des Schlauchmaterials in die Spalte zwischen Enden der Randabschnitte 17 und 18, sondern durch den Streifen 20 auch, daß das Schlauchmaterial in die Wellung 19 eindringt und das Zusammenziehen der Wellung 19 behindert. Gleichzeitig bewirken die Flansche 23 bis 26 eine Führung der Randabschnitte 17 und 18.

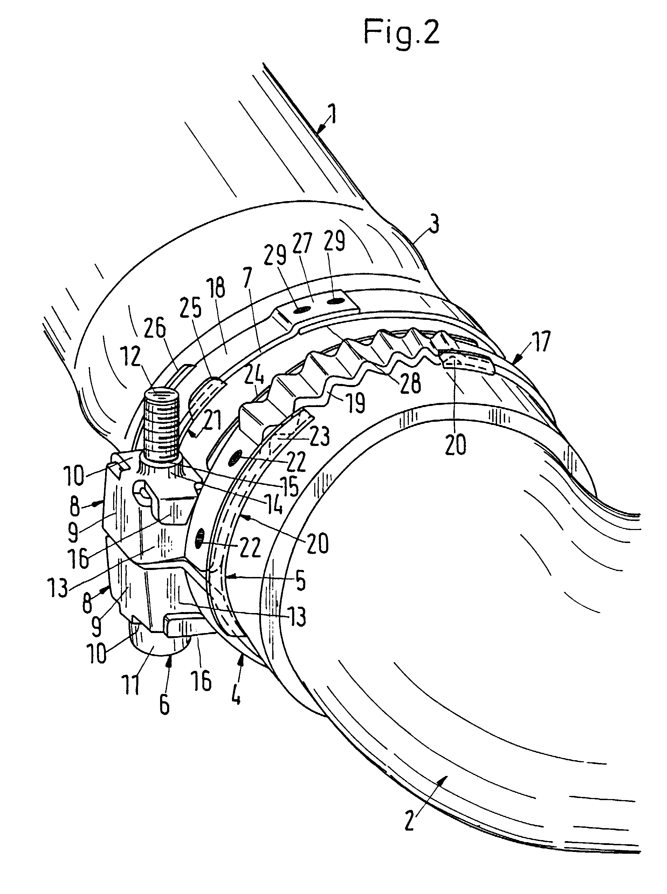

Die Schlauchschelle nach Fig. 2 unterscheidet sich von der nach Fig. 1 lediglich dadurch, daß der Randabschnitt 18 axial getrennt ist und seine Enden 27, 28 einander überlappend durch Punktschweißungen 29 verbunden sind. Auf diese Weise wird der Randabschnitt 18 in Umfangsrichtung verkürzt, um ohne Streckung des Materials der Wellung 19 durch Tiefziehen auszukommen. Vielmehr ist die Wellung 19 in diesem Fall durch Verbiegen des Randabschnitts 17 ausgebildet.

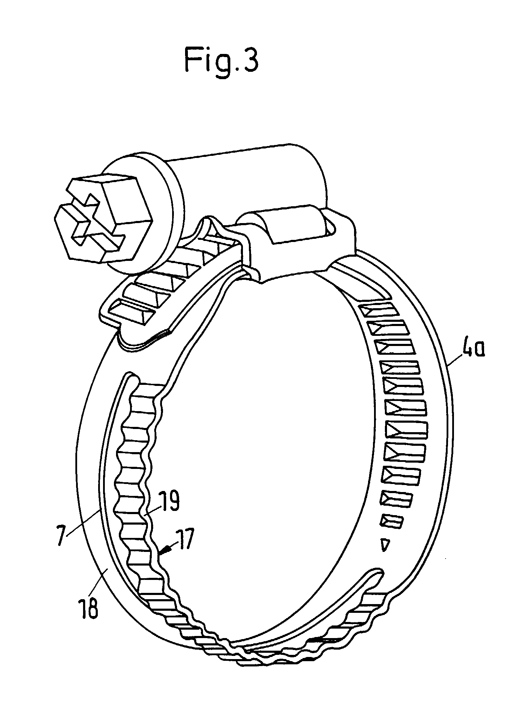

Die Schlauchschelle nach Fig. 3 ist im wesentlichen eine herkömmliche Schneckengewindeschelle, bei der das Schellenband 4a ebenfalls mit einem in Umfangsrichtung der Schlauchschelle verlaufenden Schlitz 7 versehen und nur der eine (17) der beiden den Schlitz 7 seitlich begrenzenden Randabschnitte 17, 18 des Schellenbandes 4a gewellt ist und die Wellung in Umfangsrichtung der Schlauchschelle über den gesamten Betriebstemperaturbereich eine Federkraft bewirkt. Während sich der Schlitz 7 bei der Schlauchschelle nach Fig. 1 über den gesamten Umfang der Schlauchschelle erstreckt, erstreckt er sich im Falle der Schlauchschelle nach Fig. 3 nur über etwa den halben Umfang. Vorzugsweise sollte er sich über wenigstens ein Viertel des Umfangs der gespannten Schlauchschelle erstrecken.

Auch bei der Schlauchschelle nach Fig. 3 kann eine der Unterlage 5 nach Fig. 1 entsprechende Unterlage vorgesehen sein.

Die Wirkungsweisen der Schlauchschellen nach den Fig. 2 und 3 gleichen prinzipiell der Wirkungsweise der Schlauchschelle nach Fig. 1.

Anstelle der dargestellten Wellung 19 aus mehreren Wellen kann auch eine Wellung mit nur einer Welle oder einer Halbwelle, insbesondere einer etwa Ω-förmigen Welle, vorgesehen sein.

Sodann kann anstelle der im Randabschnitt 17 integrierten Wellung 19 eine separate Feder vorgesehen sein, die entweder die Enden einer Unterbrechung des einen Randabschnitts 17 verbindet oder als eine gewölbte oder gewellte Blattfeder oder dergleichen an der Innenseite des dann ungewellten ununterbrochenen Randabschnitts 17 angebracht ist. Alternativ ist es möglich, eine Kombination von Federn anstelle der Wellung 19 oder zusätzlich zu der Wellung 19 oder mehrere Federn vorzusehen.

## Patentansprüche

1. Schlauchschelle mit einem elastisch biegsamen Schellenband (4; 4a) aus Metall und einem die Enden des Schellenbandes (4; 4a) verbindenden Spannkopf, **dadurch gekennzeichnet,** daß das Schellenband (4; 4a) einen in Umfangsrichtung verlaufenden Schlitz (7) aufweist und nur der eine (17) der beiden den Schlitz (7) seitlich begrenzenden Randabschnitte (17, 18) des Schellenbandes (4; 4a) eine Federeinrichtung (19) aufweist, die in Umfangsrichtung der Schlauchschelle über den gesamten Betriebstemperaturbereich eine Federkraft bewirkt.

2. Schlauchschelle nach Anspruch 1, **dadurch gekennzeichnet,** daß die Federeinrichtung durch eine Wellung (19) des einen Randabschnitts (17) gebildet ist.

3. Schlauchschelle nach Anspruch 2, **dadurch gekennzeichnet,** daß die Wellung (19) durch Tiefziehen ausgebildet ist.

4. Schlauchschelle nach Anspruch 2 oder 3, **dadurch gekennzeichnet,** daß der andere Randabschnitt (18) getrennt ist und seine Enden (27, 28) einander überlappend verbunden sind und daß die Wellung (19) durch Verbiegen des einen Randabschnitts (17) ausgebildet ist.

5. Schlauchschelle nach einem der Ansprüche 2 bis 4, **dadurch gekennzeichnet,** daß die Wellung (19) auf der Innenseite des Schellenbandes (4; 4a) durch eine Unterlage (5) abgedeckt ist, die am Schellenband (4; 4a) so befestigt ist, daß eine Relativbewegung zwischen Wellung (19) und Unterlage (5) möglich ist.

6. Schlauchschelle nach Anspruch 5, **dadurch gekennzeichnet,** daß die Unterlage (5) einen Spalt zwischen den Enden des Schellenbandes (4) überbrückt.

7. Schlauchschelle nach Anspruch 5 oder 6, **dadurch gekennzeichnet,** daß die Unterlage (5) durch einen (20) oder zwei Streifen (20, 21) gebildet oder etwa U-förmig ist, daß der eine (20) der beiden Streifen (20, 21) oder der einzige Streifen (20) oder der eine Schenkel (20) der U-förmigen Unterlage (5) die Unterseite der Wellung (19) abdeckt, daß der andere (21) der beiden Streifen (20, 21) oder Schenkel (20, 21) an der Unterseite des ungewellten Randabschnitts (18) anliegt und daß die beiden Streifen (20, 21) oder Schenkel (20, 21) oder der einzige Streifen (20) radial nach außen gebogene Flansche (24-26) aufweisen bzw. aufweist, die an den Rändern des jeweiligen Randabschnitts (17, 18) anliegen.

8. Schlauchschelle nach einem der Ansprüche 1 bis 7, **dadurch gekennzeichnet,** daß der Schlitz (7) an seinen Enden jeweils von einer aus dem Schellenband (4) herausgedrückten, eine Spannbacke bildenden, bandförmigen, etwa umgekehrt U-förmigen Schlaufe (8) überbrückt ist und beide Schlaufen (8) von einer Spannschraube (6) durchsetzt sind.

9. Schlauchschelle nach Anspruch 8, **dadurch gekennzeichnet,** daß die Schlaufen (8) sich in Axialrichtung der Schlauchschelle erstreckende Joche (9) aufweisen, an deren einander abgekehrten Rändern Laschen (10) radial nach innen abgebogen sind, von denen die auf seiten des Spannschraubenkopfes (11) liegende Lasche (10) ein Loch zur Durchführung des Spannschraubenschaftes (12) aufweist und an den angrenzenden Rändern der Schlaufenschenkel (13) anliegt und die Lasche (10) der benachbarten Schlaufe (8) ein Gewinde abstützt, in das der Spannschraubenschaft eingreift.

10. Schlauchschelle nach Anspruch 9, **dadurch gekennzeichnet,** daß das Gewinde im durchgezogenen Rand (14) eines Loches (15) in der Lasche (10) der benachbarten Schlaufe (8) ausgebildet ist und diese Lasche (10) an den angrenzenden Schlaufenschenkeln (13) anliegt.

11. Schlauchschelle nach Anspruch 9 oder 10, **dadurch gekennzeichnet,** daß die Laschen (10) seitlich auf die angrenzenden Schlaufenschenkel (13) umgebogene Lappen (16) aufweisen.

12. Schlauchschelle nach einem der Ansprüche 1 bis 7, **dadurch gekennzeichnet,** daß die Schlauchschelle eine Schneckengewindeschelle ist.

13. Schlauchschelle nach einem der Ansprüche 1 bis 12, **dadurch gekennzeichnet,** daß sich der Schlitz (7) über wenigstens ein Viertel des Umfangs der gespannten Schlauchschelle erstreckt.

## Claims

1. A hose clip having an elastically flexible clip band (4; 4a) of metal and a clamping head connecting the ends of the clip band (4; 4a), characterised in that the clip band (4; 4a) has a slot (7) extending in the peripheral direction and only the one (17) of the two edge portions (17, 18) of the clip band (4; 4a) which laterally define the slot (7) has a spring means (19) which produces a spring force in the peripheral direction of the hose clip over the entire operating temperature range.

2. A hose clip according to claim 1 characterised in that the spring means is formed by a corrugation configuration (19) of the one edge portion (17).

3. A hose clip according to claim 2 characterised in that the corrugation configuration (19) is formed by deep drawing.

4. A hose clip according to claim 2 or claim 3 characterised in that the other edge portion (18) is separate and its ends (27, 28) are connected in mutually overlapping relationship and that the corrugation configuration (19) is provided by bending of the one edge portion (17).

5. A hose clip according to one of claims 2 to 4 characterised in that the corrugation configuration (19) is covered on the inside of the clip band (4; 4a) by a support (5) which is fixed to the clip band (4; 4a) in such a way that a relative movement between the corrugation configuration (19) and the support (5) is possible.

6. A hose clip according to claim 5 characterised in that the support (5) bridges over a gap between the ends of the clip band (4).

7. A hose clip according to claim 5 or claim 6 characterised in that the support (5) is formed by one (20) or two strips (20, 21) or is approximately U-shaped, that the one (20) of the two strips (20, 21) or the single strip (20) or the one limb (20) of the U-shaped support (5) covers over the underside of the corrugation configuration (19), that the other one (21) of the two strips (20, 21) or limbs (20, 21) bears against the underside of the uncorrugated edge portion (18) and that the two strips (20, 21) or limbs (20, 21) or the single strip (20) have or has radially outwardly bent flanges (24-26) which bear against the edges of the respective edge portion (17, 18).

8. A hose clip according to one of claims 1 to 7 characterised in that at each of its ends the slot (7) is bridged by a band-shaped loop (8) which is of a substantially inverted U-shaped configuration and which is pressed out of the clip band (4) and which forms a clamping jaw, and a clamping screw (6) passes through both loops (8).

9. A hose clip according to claim 8 characterised in that the loops (8) have yokes (9) which extend in the axial direction of the hose clip and at the mutually remote edges of which plates (10) are bent over radially inwardly, of which the plate (10) which is disposed on the side of the clamping screw head (11) has a hole for passing the clamping screw shank (12) therethrough and bears against the adjoining edges of the loop limbs (13) and the plate (10) of the adjacent loop (8) supports a screwthread into which the clamping screw shank engages.

10. A hose clip according to claim 9 characterised in that the screwthread is provided in the drawn-through edge (14) of a hole (15) in the plate (10) of the adjacent loop (8) and said plate (10) bears against the adjoining loop limbs (13).

11. A hose clip according to claim 9 or claim 10 characterised in that the plates (10) have lugs (16) which are bent over laterally on to the adjoining loop limbs (13).

12. A hose clip according to one of claims 1 to 7 characterised in that the hose clip is a worm drive hose clip.

13. A hose clip according to one of claims 1 to 12 characterised in that the slot (7) extends over at least a quarter of the periphery of the tightened hose clip.

## Revendications

1. Collier de serrage comportant un ruban de serrage (4 ; 4a) en métal, doué de souplesse élastique, et une tête de serrage reliant les extrémités du ruban de serrage (4 ; 4a), caractérisé par le fait que ledit ruban de serrage (4 ; 4a) présente une fente (7) s'étendant dans la direction périphérique, et seul l'un (17) des deux segments marginaux (17, 18) du ruban de serrage (4 ; 4a), délimitant latéralement ladite fente (7), est muni d'un dispositif élastique (19) qui développe une force élastique dans la direction périphérique du collier de serrage, sur toute la plage de températures de service.

2. Collier de serrage selon la revendication 1, caractérisé par le fait que le dispositif élastique est formé par une ondulation (19) de l'un (17) des segments marginaux.

3. Collier de serrage selon la revendication 2, caractérisé par le fait que l'ondulation (19) est ménagée par emboutissage profond.

4. Collier de serrage selon la revendication 2 ou 3, caractérisé par le fait que l'autre segment marginal (18) est séparé, et ses extrémités (27, 28) sont reliées avec chevauchement mutuel ; et par le fait que l'ondulation (19) est ménagée par cintrage de l'un (17) des segments marginaux.

5. Collier de serrage selon l'une des revendications 2 à 4, caractérisé par le fait que l'ondulation (19) est recouverte, sur la face interne du ruban de serrage (4 ; 4a), par une pièce de calage (5) qui est fixée, audit ruban de serrage (4 ; 4a), de manière à autoriser un mouvement relatif entre ladite ondulation (19) et ladite pièce de calage (5).

6. Collier de serrage selon la revendication 5, caractérisé par le fait que la pièce de calage (5) comble un interstice entre les extrémités du ruban de serrage (4).

7. Collier de serrage selon la revendication 5 ou 6, caractérisé par le fait que la pièce de calage (5) est formée d'une (20) ou de deux bandes (20, 21), ou revêt sensiblement la forme d'un U ; par le fait que l'une (20) des deux bandes (20, 21) ou la bande unique (20), voire l'une (20) des branches de la pièce de calage (5) configurée en U, recouvre la face inférieure de l'ondulation (19) ; par le fait que l'autre (21) des deux bandes (20, 21) ou des deux branches (20, 21) est appliquée contre la face inférieure du segment marginal (18) dépourvu d'ondulation ; et par le fait que les deux bandes (20, 21) ou les deux branches (20, 21), voire la bande unique (20), possède(nt) des brides (24-26) qui sont coudées radialement vers l'extérieur et portent contre les bords du segment marginal (17, 18) considéré.

8. Collier de serrage selon l'une des revendications 1 à 7, caractérisé par le fait que la fente (7) est respectivement coiffée, à ses extrémités, par une boucle (8) en forme de ruban sensiblement configurée en U inversé, constituant une mâchoire de serrage et emboutie vers l'extérieur à partir du ruban de serrage (4), et les deux boucles (8) sont traversées par une vis de serrage (6).

9. Collier de serrage selon la revendication 8, caractérisé par le fait que les boucles (8) présentent des étriers (9) s'étendant dans la direction axiale dudit collier de serrage et dont les bords, tournés mutuellement à l'opposé, comportent des pattes (10) qui sont coudées radialement vers l'intérieur et parmi lesquelles la patte (10), située du côté de la tête (11) de la vis de serrage, est pourvue d'un trou pour le passage de la tige (12) de ladite vis de serrage, et est appliquée contre les bords adjacents des branches (13) de la boucle ; et la patte (10) de la boucle (8) voisine offre un appui à un filetage dans lequel pénètre la tige de la vis de serrage.

10. Collier de serrage selon la revendication 9, caractérisé par le fait que le filetage est façonné dans le bord rehaussé (14) d'un trou (15) pratiqué dans la patte (10) de la boucle (8) voisine, et cette patte (10) porte contre les branches adjacentes (13) de la boucle.

11. Collier de serrage selon la revendication 9 ou 10, caractérisé par le fait que les pattes (10) présentent des lobes (16) rabattus latéralement sur les branches adjacentes (13) des boucles.

12. Collier de serrage selon l'une des revendications 1 à 7, caractérisé par le fait que ledit collier de serrage est un collier à vis sans fin.

13. Collier de serrage selon l'une des revendications 1 à 12, caractérisé par le fait que la fente (7) s'étend sur au moins un quart du pourtour dudit collier de serrage à l'état bloqué.
